# EUROPEAN PATENT SPECIFICATION

(11) **EP 1 995 569 B1**
(45) Date of publication and mention of the grant of the patent: **14.07.2010**
(21) Application number: 08016168.0
(22) Date of filing: 24.04.2006
(51) Int. Cl.: G01F 1/32, G01F 1/58

(54) **Flow meter using a fluidic oscillator with alternating drive signal**
Durchflussmesser mit einem Flüssigkeitsoszillator mit alternierendem Ansteuersignal
Débitmètre avec un oscillateur à fluide avec signal de commande alternatif

(30) Priority: 26.04.2005 GB 0508342
(43) Date of publication of application: 26.11.2008
(62) Divisional of application: 06726875.5
(73) Proprietor: Severn Trent Metering Services Limited, Chesterfield, Derbyshire S41 9PZ (GB)
(72) Inventor: Cottam, David, Matlock Bath, DE4 3PB (GB); Fairman, Mark Andrew, Sheffield S8 8HF (GB)
(74) Representative: Makovski, Priscilla Mary

(56) References cited:
- EP-A2- 0 381 344
- WO-A-97/22854

## Description

This invention relates to a fluid flow meter and in particular to a meter for measuring the flow of liquids and operating on the fluidic oscillator principle.

It is well known that the frequency of oscillation of a fluidic oscillator is dependent (though not necessarily linearly) on the rate of flow through it. This principle has been used for the measurement of the flow of liquids and in particular in water meters to measure the water consumption of a property, for example. However, in practice, it can be particularly difficult to obtain accurate measurements (i.e. within one or two percent) in situations where the flow rate can vary over a wide range, and where the pressure of the fluid may vary substantially. Accuracy of measurement needs to be maintained over a turn-down ratio of as much as 200 to 1 and where the flow velocity may also change over a corresponding range of 200 to 1. Further, the pressure fluctuations may vary by a factor as much as 40,000 to 1.

Fluidic oscillators that are used for measuring water consumption typically comprise a body containing an inlet jet leading into a pair of channels separated by a splitter. Downstream of the splitter the main channel includes two feedback loops that lead back to opposite sides of the path of the fluid adjacent the inlet jet. As is known, the high velocity component of the fluid will "attach" itself to the wall of one of the channels by the Coanda effect, but then as a result of the action of the fluid that is fed back, it will switch across to the other wall. The switching or oscillating is dependent upon the rate of flow.

These oscillations can be detected electromagnetically by applying a magnetic field across the flow and detecting the resulting e.m.f generated with the appropriate channel wall so as not to disturb the flow, nor add to the substantial velocity and pressure changes encountered in water metering. Thus, this arrangement can be used in the metering of domestic water supplies as it can be constructed to measure with sufficient accuracy for metering purposes.

Further, water may be caused to move inside the oscillator by other external effects such as mechanical vibration or water pressure pulsation although there is no net flow of water. Under such circumstances it is possible to detect signals at the sensing electrodes that could be confused with signals caused by genuine fluid flow. These signals could be generated by either electromagnetic induction or electrochemical reactions at the surface of the electrodes.

The signals detected by the electrodes are typically processed by signal processing means which may include several stages of signal amplification. The signal processing means should ideally be able to filter out noise in the signal and also cancel common-mode signals. It has been found that the more accurate readings can be obtained by applying a driving signal to the electrodes. Further, it has been found that the form of the signal is particularly important.

EP 0 381 344 discloses a fluidic oscillator flow meter that uses a pair of electrodes to detect the potential difference resulting from the oscillating fluid flow.

According to the invention we provide a fluidic oscillator liquid flow meter comprising a body having an inlet portion to receive a flow of liquid to be measured, an outlet portion, a main channel defining a flow path which includes feedback means to induce oscillations in the flowing fluid, the oscillations being detected by detector means, the detector means comprising magnetic field generating means to apply a magnetic field across the flow path and at least one pair of sensing electrodes to detect the resulting e.m.f, wherein the detector means also includes driving signal means which applies an alternating driving signal to the sensing electrodes.

The use of a driving signal and, in particular, an alternating driving signal is advantageous as the detector means and therefore the metering of fluid flow is accurate and reliable.

Preferably the alternating driving signal has a frequency of between 700 Hz and 1 KHz. However, it has been found that the frequency of the applied signal should be different from and preferably substantially different from the range of signals produced by the oscillating fluid flow, which is typically between 0 to 100 Hz. Thus, depending on the rate of flow the alternating driving signal preferably has a frequency of greater than 200 Hz and less than 200 KHz.

The alternating signal may be a sine wave or a saw-tooth wave. Preferably the signal is substantially a square wave. The alternating driving signal is preferably applied to the electrodes via capacitors and therefore if a square wave is applied through the capacitors the alternating signal at the electrodes is a rounded square wave.

Preferably the alternating signal has a voltage between 0 volts and 3.6 volts.

According to an embodiment of the invention we provide the fluidic oscillator liquid flow meter with the at least one pair of sensing electrodes to detect the resulting e.m.f, the electrodes being positioned such that they protrude from the body into the flow path.

This arrangement of the electrodes is particularly advantageous as the sensitivity of the detector means is improved without adversely affecting the calibration and stability of the oscillator as a fluid measuring device. Thus, the positioning of the electrodes such that instead of being flush with the body, they protrude into the flow does not disturb the flow to the extent that accurate measurement is no longer possible and in fact allows particularly accurate metering. Further, it has been found that the electrode arrangement of the invention minimises false readings caused by mechanical vibration or water pressure pulsation.

Preferably, at least one of the pair of sensing electrodes protrudes from the body into the flow a distance between 0.5mm and 10mm. This range of protrusion improves the accuracy of the meter while not creating a significant blockage in the flow path, which would result in a pressure drop that may disturb the oscillations and therefore the accuracy.

The electrodes may be placed in the main channel. Alternatively, the electrodes may be placed in at least one feedback channel.

The oscillator may include a splitter in the main channel to promote oscillation of the flow. Preferably, the feedback means comprises two feedback channels that split from the main channel and lead back to rejoin the main channel upstream adjacent the inlet portion.

Preferably, there are two pairs of sensing electrodes, each pair being located in each feedback channel. Alternatively, one pair may be located in the feedback channel and another pair located in the main channel.

The magnetic field generating means may comprise at least one permanent magnet. Preferably the at least one magnet is embedded in walls of the body of the meter and is electrically insulated from the fluid flow. The magnet may be made of an electrically non-conducting material such as plastics-bonded ferrite and therefore may form part of the wall of the body.

There now follows by way of example only, a detailed description of the present invention with reference to the accompanying drawings in which;
**Figure 1** shows a part sectional view of a fluidic oscillating water meter;
**Figure 2** shows side sectional view of the meter shown in Figure 1;
**Figure 3** shows a first embodiment of an electrode driving circuit for use in the flow meter of the invention;
**Figure 4** shows a second embodiment of an electrode driving circuit for use in the flow meter of the invention;
**Figure 5** is a graph showing the form of the alternating driving signal that is applied to the driving circuit electronics; and
**Figure 6** is a graph showing the form of the alternating driving signal that is applied to the electrodes through the driving circuit electronics.

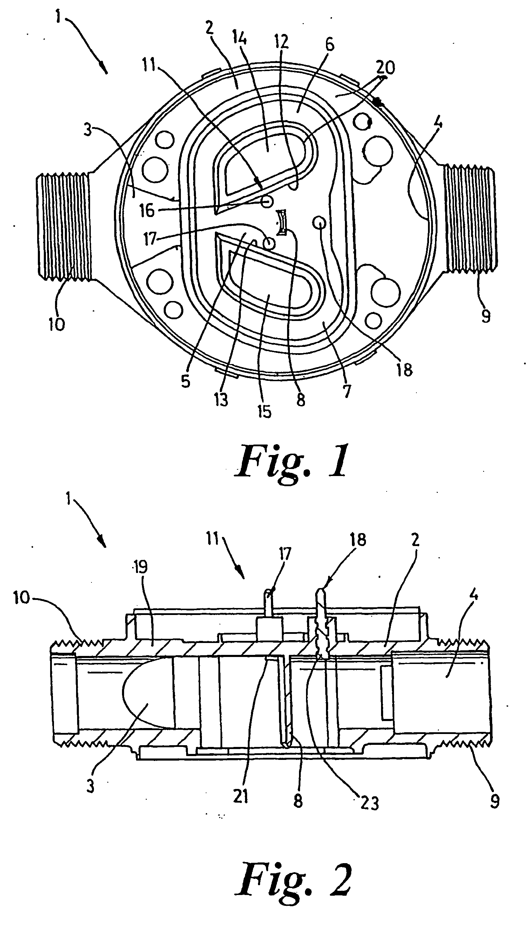

A fluidic oscillator 1 is shown in Figure 1 and is generally of known kind and is for use as a domestic water meter. The oscillator meter 1 comprises a body 2, which includes walls 20 that define a plurality of flow paths. The body 2 defines an inlet portion 3, an outlet portion 4 and a main channel 5 therebetween. The body 2 also defines feedback means, which comprises two looped feedback channels 6, 7, that split from the main channel 5 and then lead back to rejoin the main channel 5 adjacent the inlet portion 2. The splitter 8 is located centrally in the main channel 5, between the splitting and rejoin points of the feedback channels 6, 7.

The inlet portion 3 comprises a narrowed aperture that receives flow from an inlet tube (not shown) that is connected to the inlet portion 3 by a screw thread 10. Similarly, the outlet portion 4 is adapted to receive an outlet tube (not shown) that is connected thereto by a screw thread 9.

Fluid received through the inlet portion 3 flows through the flow path of the main channel 5 and will, by virtue of the Coanda effect, "attach" itself to the one of surfaces 12 or 13. The splitter 8 encourages the flow to be predominately adjacent one surface 12, 13 or the other. If the flow is "attached" to surface 12, it will predominately flow around feedback channel 6. This fed-back fluid will disturb the part of the flow adjacent the inlet 3 and will encourage the flow to "attach" itself to the other surface 13. Thus, the flow from inlet portion 3 to outlet portion 4 will oscillate between being "attached" to surface 12, and flowing predominately through feedback channel 6, to being "attached" to surface 13, and flowing predominately through feedback channel 7. These oscillations are dependent on the quantity of flow through the meter 1.

The fluidic oscillator meter 1 includes detector means 11. The detector means 11 comprises magnetic field generating means in the form of permanent magnets 14, 15 mounted in the walls 20 of the flow paths defined by the body 2. The magnets 14, 15 apply a magnetic field across the flow in the main channel 5. The detector means 11 also includes electrodes 16, 17, 18 to detect the resulting e.m.f. generated in the oscillating flow. This signal is used in the metering of the fluid flow through the meter 1.

The electrodes 16, 17, 18 comprise metal cylindrical members that extend through a top wall 19 of the body 2. The distal ends 21, 22, 23 of the electrodes 16, 17, 18 protrude through the body 2 into the flow path of the main channel 5. The detector means 11 is capable of accurate measurement of the flow through the meter 1 as the electrodes protrude into the flow path. The electrodes 16, 17, 18 protrude past the wall 19 of the body 2 a distance of approximately 1mm. It will be appreciated that the magnets 14, 15 and electrodes 16, 17, 18 can be located elsewhere in the flow paths defined by the body 2. For instance, the magnets 14, 15 may be positioned within opposed walls 20 of the feedback loop 6 or 7, with the electrodes appropriately positioned and protruding into the feed back flow path. Further the electrodes could alternatively protrude a distance of approximately 2, 3, 4, 5, 6, 7, 8 or 9mm.

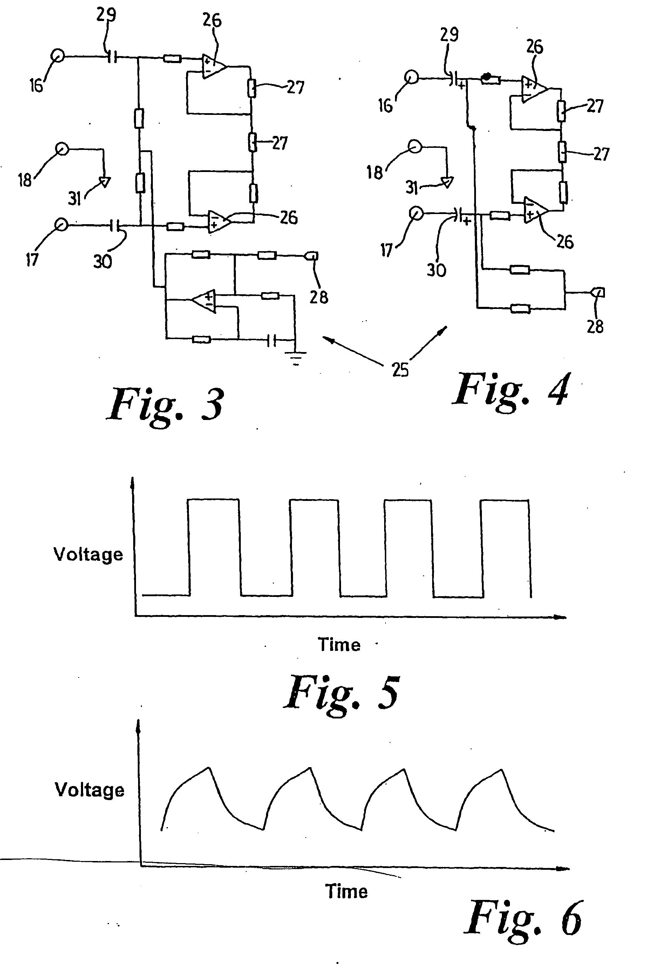

The electrodes comprise two sensing electrodes 16, 17 and one earth electrode 18. The electrodes 16, 17, 18 are connected to a driving signal means comprising an electrode bias circuit 25. Two embodiments of the electrode bias circuit 25 are shown as Figure 3 and Figure 4. The electrode bias circuits 25 both include a plurality of operational amplifiers 26 and resistors 27 arranged to apply a driving signal, that is input at 28, to the sensing electrodes 16, 17. The driving signal is applied to the sensing electrodes 16, 17 through capacitors 29, 30 (the capacitors of Figure 4 being of polarized type). The earth electrode 18 is connected to ground 31.

The form of the driving signal applied to the electrode bias circuits 25 is shown in Figure 5 and is a square wave. It is advantageous to apply a driving signal to the electrodes 16, 17 to achieve accurate and reliable metering of the fluid flow. The form of the signal that is applied to the electrodes through capacitors 29, 30 is shown in Figure 6. As can be seen, the square wave is rounded due to the time constant of the capacitors 29, 30. As will be appreciated, the graphs showing the driving signal (Figure 5) and applied driving signal (Figure 6) are only intended to show the form of the signal and do not give a relative comparison of the two signals.

However, the frequency of the applied driving signal is typically 0.5 KHz and the RMS voltage of the signal is typically 2 Volts.

## Claims

1. A fluidic oscillator liquid flow meter comprising a body (2) having an inlet portion (3) to receive a flow of liquid to be measured, an outlet portion (4), a main channel (5) defining a flow path which includes feedback means (6,7) to induce oscillations in the flowing fluid, the oscillations being detected by detector means (11), the detector means (11) comprising magnetic field generating means (14,15) to apply a magnetic field across the flow path and at least one pair of sensing electrodes (16,17,18) to detect the resulting e.m.f, **characterised in that** the detector means (11) also includes driving signal means (25) which applies an alternating driving signal to the sensing electrodes (16,17).

2. A fluidic oscillator liquid flow meter according to claim 1, in which the alternating driving signal has a frequency of between 700 Hz and 1 KHz.

3. A fluidic oscillator liquid flow meter according to claim 1 or claim 2, in which the frequency of the applied signal is different from the range of signals produced by the oscillating fluid flow.

4. A fluidic oscillator liquid flow meter according to any preceding claim, in which the alternating signal is a sine wave

5. A fluidic oscillator liquid flow meter according to any of claims 1 to 3, in which the alternating signal is a saw-tooth wave.

6. A fluidic oscillator liquid flow meter according to claims 1 to 3, in which the alternating signal is substantially a square wave.

7. A fluidic oscillator liquid flow meter according to any preceding claim, in which the alternating driving signal is applied to the electrodes (16, 17) via capacitors (29, 30).

8. A fluidic oscillator liquid flow meter according to any preceding claim, in which the alternating signal has a voltage between 0 volts and 3.6 volts.

## Patentansprüche

1. Strömungstechnisches Oszillator-Flüssigkeitsflussmessgerät umfassend einen Körper (2) mit einem Einlassabschnitt (3) zum Empfangen eines zu messenden Flüssigkeitsflusses, einen Auslassabschnitt (4), einen Hauptkanal (5), der einen Flusspfad definiert, der eine Rückkopplungseinrichtung (6, 7) umfasst, um Oszillationen in der fließenden Flüssigkeit herbeizuführen, wobei die Oszillationen durch eine Detektionseinrichtung (11) detektiert werden, wobei die Detektionseinrichtung (11) eine Magnetfeld-erzeugende Einrichtung (14, 15) umfasst, um ein Magnetfeld über dem Flusspfad zu applizieren, und zumindest ein Paar Fühlelektroden (16, 17, 18), um das resultierende EMF zu detektieren,
**dadurch gekennzeichnet,**
**dass** die Detektionseinrichtung (11) auch ein eine Treibersignaleinrichtung (25) umfasst, die ein alternierendes Treibersignal auf die Fühlelektroden (16,17) appliziert.

2. Strömungstechnisches Oszillator-Flüssigkeitsflussmessgerät nach Anspruch 1, bei dem das alternierende Treibersignal eine Frequenz von zwischen 700 Hz und 1 KHz hat.

3. Strömungstechnisches Oszillator-Flüssigkeitsflussmessgerät nach Anspruch 1 oder Anspruch 2, bei dem die Frequenz des applizierten Signals sich von dem Bereich der durch den oszillierenden Flüssigkeitsfluss erzeugten Signale unterscheidet.

4. Strömungstechnisches Oszillator-Flüssigkeitsflussmessgerät nach einem der vorhergehenden Ansprüche, bei dem das alternierende Signal eine Sinuswelle ist.

5. Strömungstechnisches Oszillator-Flüssigkeitsflussmessgerät nach einem der Ansprüche 1 bis 3, bei dem das alternierende Signal eine Sägezahnwelle ist.

6. Strömungstechnisches Oszillator-Flüssigkeitsflussmessgerät nach Ansprüchen 1 bis 3, bei dem das alternierende Signal im Wesentlichen eine Rechteckswelle ist

7. Strömungstechnisches Oszillator-Flüssigkeitsflussmessgerät nach einem der vorhergehenden Ansprüche, bei dem das alternierende Treibersignal über Kondensatoren (29, 30) auf die Elektroden (16, 17) appliziert wird.

8. Strömungstechnisches Oszillator-Flüssigkeitsflussmessgerät nach einem der vorhergehenden Ansprüche, bei dem das alternierende Signal eine Spannung zwischen 0 Volt und 3,6 Volt hat.

## Revendications

1. Débitmètre à oscillateur fluidique comprenant un corps (2) comportant une partie entrée (3) pour recevoir un écoulement de liquide à mesurer, une partie sortie (4), un canal principal (5) définissant un chemin d'écoulement qui comprend un moyen de rétroaction (6, 7) pour induire des oscillations dans le fluide en mouvement, les oscillations étant détectées par un moyen formant détecteur (11), le moyen formant détecteur (11) comprenant un moyen générant un champ magnétique (14, 15) pour appliquer un champ magnétique en travers du chemin d'écoulement et au moins une paire d'électrodes de mesure (16, 17, 18) pour détecter la f.é.m. résultante, **caractérisé en ce que** le moyen formant détecteur (11) comprend aussi un moyen d'application de signal d'attaque (25) qui applique un signal d'attaque alternatif aux électrodes de mesure (16, 17).

2. Débitmètre à oscillateur fluidique selon la revendication 1, dans lequel le signal d'attaque alternatif présente une fréquence située entre 700 Hz et 1 kHz.

3. Débitmètre à oscillateur fluidique selon la revendication 1 ou 2, dans lequel la fréquence du signal appliqué est différente de la gamme des signaux produits par l'écoulement de fluide oscillant.

4. Débitmètre à oscillateur fluidique selon l'une quelconque des revendications précédentes, dans lequel le signal alternatif est une onde sinusoïdale.

5. Débitmètre à oscillateur fluidique selon l'une quelconque des revendications 1 à 3, dans lequel le signal alternatif est une onde en dents de scie.

6. Débitmètre à oscillateur fluidique selon l'une quelconque des revendications 1 à 3, dans lequel le signal alternatif est sensiblement une onde carrée.

7. Débitmètre à oscillateur fluidique selon l'une quelconque des revendications précédentes, dans lequel le signal d'attaque alternatif est appliqué aux électrodes (16, 17) par l'intermédiaire de condensateurs (29, 30).

8. Débitmètre à oscillateur fluidique selon l'une quelconque des revendications précédentes, dans lequel le signal alternatif présente une tension située entre 0 volt et 3,6 volts.
